# DEMANDE DE BREVET EUROPEEN

(11) **EP 3 053 723 A1**
(43) Date de publication de la demande: **10.08.2016**
(21) Numéro de dépôt: 16154782.3
(22) Date de dépôt: 09.02.2016
(51) Int. Cl.: B29C 45/00, H05K 5/03, B29C 45/14

(54) **PROCEDE DE FABRICATION DE DISPOSITIF DE PROTECTION ET DISPOSITIF ASSOCIE**

(30) Priorité: 09.02.2015 FR 1550991
(71) Demandeur: Smart Product, 93220 Cagny (FR)
(72) Inventeur: BENHAMOU, Jean-Luc, 75017 PARIS (FR)
(74) Mandataire: Ipside

(57) **Abrégé**

La présente invention vise un procédé (20) de fabrication de dispositif (30) de protection pour terminal portable communicant comportant les étapes suivantes :
- mise en forme (21) dudit dispositif (30) de protection et d'une collerette (34) sur les bords d'une surface du dispositif (30),
- impression (22) d'au moins un motif (31) sur le produit (35) obtenu directement à partir de la mise en forme (21) dudit dispositif (30) de protection,
- recouvrement (23) dudit motif (31) imprimé avec une composition (32) comportant un polyol et un isocyanate, la collerette (34) permettant d'éviter un débordement de la composition (32) par rapport à la surface à recouvrir
- séchage (24) de ladite composition (32).

Selon un autre aspect, la présente invention vise un dispositif (30) de protection pour terminal portable communicant, obtenu par le procédé (20) objet de la présente invention.

## Description

### Domaine de l'invention

La présente invention vise un procédé de fabrication de dispositif de protection pour terminal portable communicant et le dispositif obtenu par ce procédé.

La présente invention s'applique au domaine de la protection des terminaux portables communicants et au domaine des procédés de fabrication de ces protections.

Plus particulièrement, la présente invention s'applique au domaine des matériaux utilisés dans la fabrication de ces protections de terminaux portables communicants.

### État de la technique

L'usage d'un terminal portable communicant s'est démocratisé depuis longtemps et les technologies autour de ces derniers ne cessent d'évoluer. Les téléphones mobiles et tablettes d'aujourd'hui présentent une certaine fragilité face aux chocs qui peuvent leur être infligés. Ce problème de fragilité peut être écarté, notamment par un dispositif de protection comme les coques ou les housses de protection en différents matériaux communément utilisées. Pour des raisons commerciales simples, l'aspect esthétique du terminal portable communicant ne doit pas pour autant être entaché par le dispositif de protection et c'est pourquoi, de manière générale, les dispositifs de protection d'aujourd'hui présentent eux-mêmes des aspects esthétiques variés afin de convenir aux différents goûts des consommateurs.

Il existe plusieurs méthodes de mise en forme de protections de terminaux portables communicants comme celles par ajout de matière (imprimante 3D, prototypage par dépôt, prototypage par lasers) ou enlèvement de matière (usinage à l'outil coupant, usinage par étincelage, usinage par abrasion). Il existe aussi les méthodes de mise en forme par moulage (fonderie à cire perdue, injection plastique, MIM, coulée sous vide) et les méthodes de mise en forme par déformation (matriçage et estampage, emboutissage, thermoformage).

Le thermoformage est une technique qui consiste à prendre un matériau sous forme de plaque (verre, plastique...), à le chauffer pour le ramollir, et à profiter de cette ductilité pour le mettre en forme avec un moule. Le matériau redurcit lorsqu'il refroidit, gardant cette forme.

Dans le cas du thermoformage plastique, le matériau utilisé se présente le plus souvent sous forme de bobine, dès que l'épaisseur avant thermoformage se situe sous deux millimètres. Dans le cas du verre, cela consiste à poser à froid une ou des feuilles de verre, éventuellement colorées, sur une forme réfractaire dont elles épouseront le relief à la cuisson.

La matière peut être directement thermoformée avec un film de protection ou un revêtement décoratif (imitation bois, cuir...).

Le thermoformage est réalisé à partir de semi-produits, c'est-à-dire que la matière a été préalablement extrudée sous forme de plaques ou de film (bobines).

La grande difficulté du thermoformage réside dans le fait qu'il n'est pas évident de prévoir l'étalement de la matière sur le moule (création de plis, de marques de figeage, variations d'épaisseurs), contrairement à l'injection dont les paramètres sont moins aléatoires.

L'injection d'un plastique permet d'obtenir en une seule opération des pièces finies, de formes complexes, dans une gamme de masses de quelques grammes à plusieurs kilogrammes. L'injection plastique utilise un moule permanent généralement métallique, dans lequel on injecte sous pression un polymère à l'état pâteux. Après solidification, le moule s'ouvre et la pièce est éjectée. Ce procédé permet de grandes cadences de production et est donc utilisé dans le cadre de fabrication en série. La modélisation et la réalisation du moule sont basées sur un modèle numérique de la pièce.

Différents types de décoration des protections de terminaux portables communicants sont connus. Le plus connu est l'application d'un film imprimé suivant des techniques différentes telles que l'impression par transfert ou la technique d'étiquetage dans le moule (« *in-mould labelling »* en terminologie anglo-saxonne). Il existe aussi l'impression directement sur la protection comme l'impression quadrichromie.

L'état de la technique connait le document US2014295139 qui divulgue une méthode de décoration d'une surface plastique durant l'opération de moulage par injection d'une encre colorée dans le moule vers une cavité prévue à cet effet.

L'état de la technique connait aussi les documents US2014295139, GB2478813A et EP1552961 décrivant des procédés de décoration ou de protection d'une surface notamment plastique ou les dispositifs pour la mise en oeuvre de ces procédés.

Il apparait encore aujourd'hui une nécessité d'obtenir des dispositifs possédant une bonne capacité de protection de terminal portable communicant et présentant des caractéristiques esthétiques intéressantes. La recherche de procédés innovants comportant des caractéristiques techniques permettant d'obtenir de tels dispositifs de protection est alors toujours d'actualité.

### Objet de l'invention

La présente invention vise à remédier à tout ou partie de ces inconvénients.

À cet effet, selon un premier aspect, la présente invention vise un procédé de fabrication de dispositif de protection pour terminal portable communicant caractérisé en ce qu'il comporte les étapes suivantes :
- mise en forme dudit dispositif de protection comportant une collerette sur les bords d'une surface dudit dispositif,
- impression d'au moins un motif sur le produit obtenu directement à partir de la mise en forme dudit dispositif de protection,
- recouvrement dudit motif imprimé avec une composition comportant un polyol et un isocyanate, la collerette évitant un débordement de la composition par rapport à la surface à recouvrir
- séchage.

Le recouvrement par la composition apporte des propriétés antichoc, anti-UV, anti rayure et antidérapantes au dispositif de protection pour terminal portable communicant. De plus cette composition comportant un polyol et un isocyanate, lorsqu'elle est transparente, permet d'obtenir un effet loupe, grossissant, sur le motif imprimé directement sur le produit obtenu directement à partir de l'étape de mise en forme du dispositif de protection.

Dans des modes de réalisation, l'étape de mise en forme du dispositif de protection est réalisée par injection plastique dans un moule.

Ce type de mise en forme est avantageux car il permet une production de pièces en grand nombre rapidement.

Dans des modes de réalisation, l'impression d'au moins un motif sur le produit obtenu directement à partir de l'étape de mise en forme du dispositif de protection, est une impression quadrichromie. Il peut s'agir d'une impression par sublimation ou par transfert à l'eau.

La surface qui sera recouverte de résine est de préférence lisse de façon à permettre une meilleure répartition et adhésion de la résine sur la surface. Le reste du dispositif pouvant être lui enduit d'une peinture donnant un touché agréable à la coque une fois fabriquée.

Dans des modes de réalisation, l'étape de recouvrement du motif imprimé est réalisée avec une composition dans laquelle les proportions de polyol/isocyanate sont de 50%/50%.

Cela est avantageux car en dehors des chocs, il est souvent infligé aux dispositifs de protection de terminal portable communicant, des contraintes telles que des torsions ou des pliages. Le type d'isocyanate particulier utilisé permet de jouer sur la dureté de la composition et donc de conférer une souplesse plus ou moins grande au dispositif de protection, lui permettant de résister à de multiples contraintes de torsions ou pliages.

Dans des modes de réalisation, le procédé de synthèse de dispositif de protection pour terminal portable communicant comporte une étape finale supplémentaire correspondant à une surimpression, d'au moins un motif, sur la composition sèche comportant un polyol et un isocyanate.

Lorsque la composition est transparente, cette étape permet d'obtenir un effet de profondeur ou effet 3D grâce à l'espace occupé par la composition comportant une résine et un durcisseur entre le motif imprimé directement sur le produit obtenu directement à partir de l'étape de mise en forme du dispositif de protection et le motif surimprimé sur la composition comportant un polyol et un isocyanate.

Selon un deuxième aspect, la présente invention vise un dispositif de protection pour terminal portable communicant, obtenu par le procédé objet de la présente invention. Plus particulièrement, l'invention se rapporte à un dispositif de protection pour terminal portable communicant, caractérisé en ce qu'il comporte un motif imprimé sur une surface, la surface imprimée étant recouverte d'une composition de polyol et d'isocyanate, ladite surface comportant sur ses bords une collerette délimitant la couverture de résine.

Dans des modes de réalisation, la composition comportant un polyol et un isocyanate est transparente.

Dans des modes de réalisation, l'isocyanate utilisé dans la composition est de l'isocyanate « 32 shore D/85 shore A ».

Cela permet d'obtenir une composition souple après séchage et donc un dispositif de protection souple.

Ces dispositions permettent par ailleurs d'obtenir une surface présentant un pouvoir collant. Ainsi, un produit dont au moins une partie présente une composition polyol et isocyanate « 32 shore D/85 shore A » en contact avec une surface sensiblement lisse collera de manière réversible à cette dernière. Ces dispositions sont particulièrement avantageuses lorsqu'elles sont mises en oeuvre sur un dispositif de protection pour terminal portable communicant dans le but de stabiliser ledit terminal sur une table lors de la manipulation de l'écran tactile par l'utilisateur, de stabiliser ledit terminal sur une surface penchée ou encore de diminuer le risque de vol dudit terminal dans un lieu public.

Dans des modes de réalisation, l'isocyanate utilisé dans la composition est de l'isocyanate « 62 shore D/99 shore A ».
Cela permet d'obtenir une composition dure après séchage et donc un dispositif de protection dur.

Dans des modes de réalisation, le dispositif de protection pour terminal portable communicant comporte une collerette sur les bords d'une surface dudit dispositif, ladite surface étant recouverte par la composition comportant un polyol et un isocyanate.

Cette collerette présente l'avantage de pouvoir retenir la composition comportant un polyol et un isocyanate sur le produit directement obtenu à partir de l'étape de mise en forme du dispositif de protection et ainsi éviter un débordement lors de l'étape de recouvrement avec la composition.

### Brève description des figures

D'autres avantages, buts et caractéristiques particuliers de l'invention ressortiront de la description non-limitative qui suit d'au moins un mode de réalisation particulier d'un procédé et d'un dispositif, en regard des dessins annexés, dans lesquels :
- la figure 1 représente, schématiquement, un premier mode de réalisation particulier d'un procédé objet de la présente invention,
- la figure 2 illustre, schématiquement, selon un mode de réalisation, une vue des parties externes du dispositif de protection pour terminal portable communicant objet de la présente invention.
- La figure 3 illustre, schématiquement, selon un mode de réalisation, une vue des parties internes du dispositif de protection pour terminal portable communicant objet de la présente invention.
- La figure 4 illustre, schématiquement, selon un mode de réalisation, une coupe transversale d'un dispositif de protection pour terminal portable communicant objet de la présente invention.
- La figure 5 illustre, schématiquement, selon un mode de réalisation, un produit obtenu directement à la suite de l'étape d'impression d'au moins un motif sur le produit obtenu directement à partir de la mise en forme dudit dispositif de protection.
- La figure 6 illustre, schématiquement, selon un mode de réalisation, un dispositif de protection pour terminal portable communicant objet de la présente invention, obtenu après l'étape de surimpression.

### Description d'exemples de réalisation de l'invention

On note dès à présent que les figures ne sont pas à l'échelle.

La présente description est donnée à titre non limitatif, chaque caractéristique d'un mode de réalisation pouvant être combinée à toute autre caractéristique de tout autre mode de réalisation de manière avantageuse.

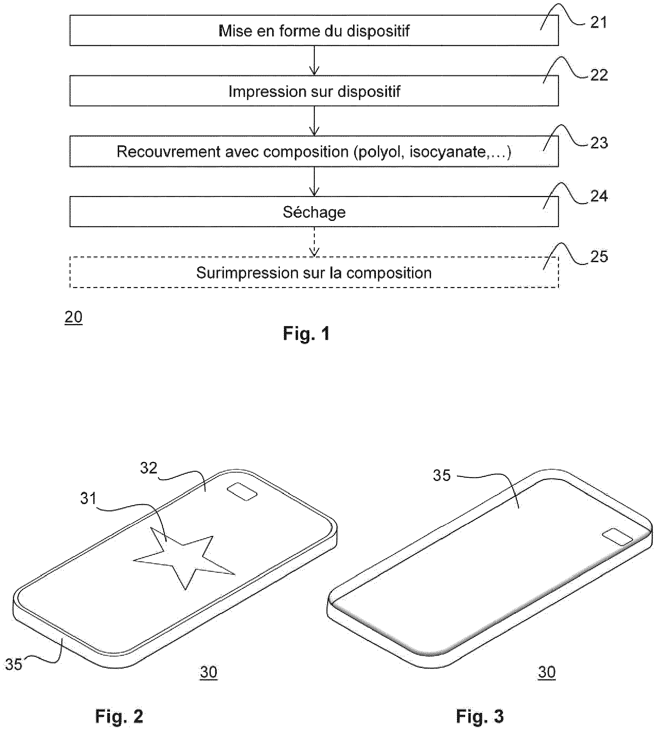

La figure 1 illustre le procédé 20 de fabrication d'un dispositif 30 de protection pour terminal portable communicant. La première étape, consiste ainsi en une mise en forme 21 du dispositif 30 de protection. Pour la présente invention, la méthode préférée pour la mise en forme du dispositif 30 de protection est l'injection plastique.

Dans des modes de réalisation la matière plastique utilisée pour réaliser l'injection plastique est un polycarbonate ou un acrylonitrile butadiène styrène (ou ABS).

Dans des modes préférés de réalisation, le moule servant à l'injection plastique est configuré de telle sorte que le dispositif 30 de protection mis en forme comporte une collerette 34 sur les bords d'une de ses surfaces.

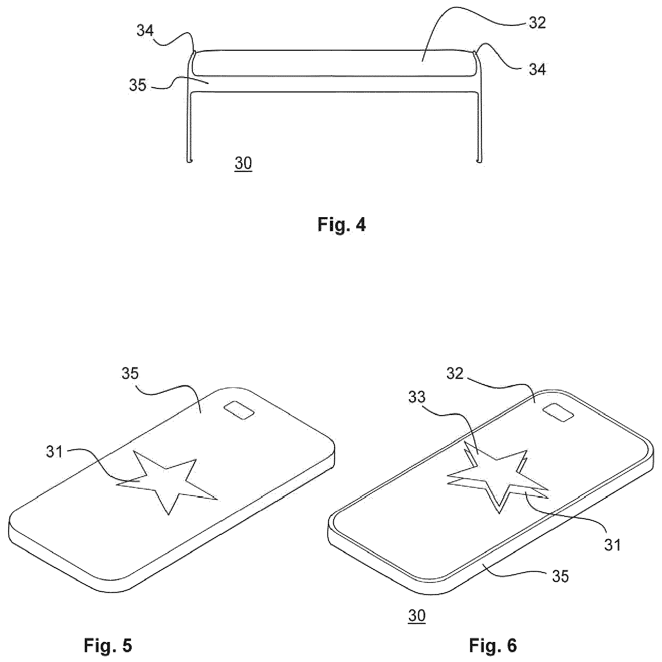

Dans une seconde étape, une impression 22 d'au moins un motif 31 est effectuée sur le produit 35 obtenu directement à partir de la mise en forme du dispositif 30 de protection (figure 5). Cette impression 22, dans un mode préféré de l'invention, est une impression quadrichromie. Dans des modes de réalisation l'imprimante utilisée est une imprimante de type ultraviolet. Ces dispositions permettent la mise en oeuvre immédiate de la troisième étape ci-dessous.

Dans une troisième étape, un recouvrement 23 du motif 31 imprimé, est effectuée avec une composition 32 comportant un polyol et un isocyanate (figures 2 et 4). La quantité de composition 32 déposée sur le produit 35 obtenu directement à partir de la mise en forme du dispositif 30 de protection, est comprise entre 8 et 17 grammes.

La dernière étape consiste en un séchage 24 de la composition 32. L'étape de séchage 24 est effectuée par réaction isothermique. Cette méthode de séchage 24 est composée de deux étapes. Durant la première étape du séchage 24, le dispositif 30 de protection est mis dans un four à 45°C pendant vingt minutes, pour qu'à l'issue de cette étape il n'y ait plus de risque de dépôt de poussières sur la composition 32 en cours de polymérisation. La seconde étape de séchage 24 consiste en une polymérisation à coeur de la composition 32 en plaçant le dispositif 30 de protection dans une étuve à 22°C pendant une durée inférieure ou égale à huit heures. Une étape supplémentaire et facultative, consiste en une surimpression 25 d'au moins un motif 33 sur la composition 32 sèche. Cette dernière étape facultative permet d'obtenir un dispositif 30 de protection comportant un effet 3D (figure 6) car les motifs 31 et 33 sont superposés et il existe un espace entre eux correspondant à la composition 32.

La composition 32 comporte au moins une résine et au moins un durcisseur. Le durcisseur est un isocyanate, Il déterminera la dureté la résine obtenue après mélange. La résine est un polyol.

Cette composition 32 est de préférence transparente afin de laisser visible chaque motif 31 imprimé.

Le polyol et l'isocyanate utilisés pour élaborer la composition 32 sont choisis par exemple parmi ceux commercialisés, seuls ou en mélange, par les sociétés Demark et Color Dek, qui commercialisent aussi les machines pour la distribution de la résine sur les produits à recouvrir.

L'isocyanate utilisé pour élaborer la composition 32 est choisi parmi au moins un des éléments suivants : l'isocyanate « 32 shore D/85 shore A » et l'isocyanate « 62 shore D/99 shore A ».

La composition comporte un seul polyol et un seul isocyanate. Il est possible d'utiliser plusieurs polyols et plusieurs isocyanates. Le choix est déterminé en fonction du processus de fabrication et du résultat souhaité.

Le polyol et l'isocyanate sont composés de matières premières déclinables à l'infini.

La dureté shore de la composition 32 et donc la souplesse du dispositif, est mesurée grâce un duromètre Shore.

Le dispositif 30 de protection illustré par la figure 4 comporte une collerette 34 sur les bords d'une surface du dispositif 30, ladite surface étant recouverte par la composition 32. Cette collerette 34 permet d'éviter un débordement de la composition 32 par rapport à la surface à recouvrir.

## Revendications

1. Procédé (20) de fabrication d'un dispositif (30) de protection pour terminal portable communicant, **caractérisé en ce qu'**il comporte les étapes suivantes :
- mise en forme (21) dudit dispositif (30) de protection comportant une collerette (34) sur les bords d'une surface du dispositif (30),
- impression (22) d'au moins un motif (31) sur le produit (35) obtenu directement à partir de la mise en forme (21) dudit dispositif (30) de protection,
- recouvrement (23) dudit motif (31) imprimé avec une composition (32) comportant un polyol et un isocyanate, la collerette (34) évitant un débordement de la composition (32) par rapport à la surface à recouvrir,
- séchage (24) de ladite composition (32).

2. Procédé (20) selon la revendication 1, dans lequel l'étape de mise en forme (21) du dispositif (30) de protection est réalisée par injection plastique dans un moule.

3. Procédé (20) selon la revendication 1 ou 2, dans lequel l'impression (22) d'au moins un motif (31) sur le produit (35) obtenu directement à partir de l'étape de mise en forme (21) du dispositif (30) de protection, est une impression quadrichromie.

4. Procédé (20) selon l'une des revendications précédentes, dans lequel l'étape de recouvrement (23) du motif (31) imprimé est réalisée avec une composition (32) dans laquelle les proportions de polyol/isocyanate sont de 50%/50%.

5. Procédé (20) selon l'une des revendications précédentes, comportant une étape finale supplémentaire correspondant à une surimpression (25), d'au moins un motif (33), sur la composition (32) sèche comportant un polyol et un isocyanate.

6. Dispositif (30) de protection pour terminal portable communicant, obtenu par le procédé (20) selon une des revendications précédentes.

7. Dispositif (30) de protection pour terminal portable communicant, **caractérisé en ce qu'**il comporte un motif imprimé sur une surface, la surface imprimée étant recouverte d'une composition de polyol et d'isocyanate, ladite surface comportant sur ses bord une collerette (34) délimitant la couverture de résine.

8. Dispositif (30) selon l'une des revendications 6 ou 7, dans lequel la composition (32) comportant un polyol et un isocyanate est transparente.

9. Dispositif (30) selon l'une des revendications 6 à 8, dans lequel l'isocyanate utilisé dans la composition (32) est de l'isocyanate « 32 shore D/85 shore A ».

10. Dispositif (30) selon l'une des revendications 6 à 9, dans lequel l'isocyanate utilisé dans la composition (32) est de l'isocyanate « 62 shore D/99 shore A ».
